# EUROPEAN PATENT SPECIFICATION

(11) **EP 4 438 344 B1**
(45) Date of publication and mention of the grant of the patent: **06.05.2026**
(21) Application number: 22898156.9
(22) Date of filing: 23.06.2022
(51) Int. Cl.: B60C 13/00, B60C 9/00, B60C 13/04

(54) **PNEUMATIC TIRE**
LUFTREIFEN
BANDAGE PNEUMATIQUE

(30) Priority: 25.11.2021 JP 2021191546
(43) Date of publication of application: 02.10.2024
(73) Proprietor: BRIDGESTONE CORPORATION, Chuo-ku Tokyo 104-8340 (JP)
(72) Inventor: SAITO, Kazuma, Tokyo 104-8340 (JP); KITAHARA, Atsushi, Tokyo 104-8340 (JP)
(74) Representative: Marks & Clerk LLP
(86) International application number: PCT/JP2022/025160
(87) International publication number: WO 2023/095371

(56) References cited:
- EP-A1- 0 614 774
- DE-A1- 102018 211 248
- DE-U1- 20 220 564
- JP-A- 2001 047 819
- JP-A- 2020 203 604
- JP-A- 2021 000 873
- JP-A- H 071 924
- JP-A- H0 443 107
- US-A- 5 871 599

## Description

### TECHNICAL FIELD

This invention relates to a pneumatic tire.

### BACKGROUND

In recent years, growing concern about environmental issues has led to greater demand for quieter tires. In response to this, technology has been proposed to increase the quietness of tires by making the sidewall portion thicker or providing a protrusion in the sidewall portion to suppress vibrations (see, for example, PTLs 1 and 2).

JP H04 43107 A relates to a pneumatic tire which is a tire which has no allowance to the maximum width of the tire standard. A side rubber for forming the outside of a side portion between a tread for forming the road surface and a bead portion is divided into three portions in the direction of the section height H. The density of the central portion is made higher than the density of the side rubber by 10% or more. The width of the central portion, the density of which is made higher, is set to 1/10H, and the central height of the central portion is set to 1/2H. Thus, the cavity resonance and vibration of the tire can be restrained without working on the cavity in the tire.

JP H07 1924 A relates to a belt layer arranged outside in the radial direction of a carcass within a tread part which is constituted by two inner and outer belt plies, and the belt cords of these belt plies are crossed each other. In an inner liner made of rubber which is arranged on the inner side of the body part of the carcass, a lining strip which is constituted by the rubber component whose rubber loss tangency is 0.15-0.25 and which is 0.15-0.55 as thick as the side wall part is attached on the inner wall surface facing the inner cavity of the tire of the inner liner at the side wall part between the inner point A to divide the distance HL which is 0.20-0.30 times the height H of the tire section and the outer point B to divide the distance HU which is 0.70-0.85 times the height H.

JP 2001 047819 A relates to a pneumatic tire having a radial structure with a flatness ratio of 55% or less. An external rubber thickness of a region positioned within a range of 30 to 40% of a tire cross section height of a tire side part is 0.25 to 0.50 times a tread part rubber thickness and an external rubber thickness of a region positioned within a range of 40 to 70% of the tire cross section length is 0.50 to 0.75 times the tread part rubber thickness.

In JP 2021 000873 A, a thickness of a belt cover coat of a pneumatic tire is set to be 0.70 mm-1.50 mm. A rubber for the belt cover coat is prepared by blending 20 pts.mass or more of natural rubber and 30 pts.mass or more of carbon black with 25-70 m2/g of N2SA with respect to 100 pts.mass of diene system rubber, where hardness (Hs cap) of a cap tread rubber and 300% modulus (M300bc) of the rubber for the belt cover coat satisfy a relational expression: 2.50 ≤ (Hs cap)/(M300 bc) ≤ 6.50.

In JP 2020 203604 A, a thickness of an under tread rubber of a pneumatic tire is set to be 5% or more of a thickness of a cap tread rubber. The under tread rubber is formed by blending 40 pts.mass or more of natural rubber, 10 to 60 pts.mass of terminal modified butadiene rubber, 40 pts.mass or more of carbon black and 20 pts.mass or less of silica with respect to 100 pts.mass of diene rubber, where hardness of the cap tread rubber (Hs cap) and storage elastic modulus (E'ut) of the under tread rubber satisfy a relational expression: 3.5 ≤ (Hs cap)/(E'ut) ≤ 18.

EP 0 614 774 A1 relates to a pneumatic radial tyre having a reduced running noise. The tyre has sidewall portions, each of which is provided on the inner surface of the airtight inner liner with a lining strip made of a rubber composition having a loss tangent of from 0.15 to 0.25. The lining strip has a radially inner edge located at a radial height of from 0.20 to 0.30 times the tyre section height and a radially outer edge located at a radial height of from 0.70 to 0.85 times the tyre section height, and the lining strip extends continuously from the inner edge to the outer edge.

US 5 871 599 A relates to a pneumatic radial tire for use in truck and bus comprising a carcass reinforcing a sidewall portion and a tread, and a belt comprised of at least two belt layers, wherein when the tire is mounted onto an approved rim and inflated under an internal pressure of 0.5-1.0 kgf/cm2, a carcass line of the carcass at a radial section of the tire comprises a curve having a maximum radius of curvature in a region ranging over 10-50% of a tire sectional height and centering around a position of a maximum carcass width, and the sidewall portion has a maximum thickness in a zone corresponding to the above region.

DE 10 2018 211248 A1 relates to a pneumatic vehicle tire with a tread, side walls and bead areas, with on the outside of at least one side wall in the area of the largest cross-sectional width of the pneumatic vehicle tire, a circumferential circumference serving as a rubbing strip opposite the other outer contour of the side wall has a thickness of in particular 1.0 mm to 2.5 mm elevation with at least one abrasion indicator, which forms a visible warning sign when the elevation is abraded is formed by at least one recess provided in the elevation with at least two hatching fields formed inside the recess parallel to the outside of the side wall and which are opposite the level of the outer contour of the side wall are positioned differently, the hatching area remaining after rubbing off at least one hatching area forms or form warning sign.

In DE 202 20 564 U1, close to the rim, the tire wall and rim have no projecting edges or bulges. The line of the rim wall follows that of the tire wall. The effect is an appearance of widening of the rim wall. The line of the rim wall is continued by the tire wall, forming an essentially closed surface. Rim edge and tire are shaped to blend into one another. The tire wall continues the line of the rim wall up to the radius marking the transition to the tread. The transition from tire to rim is flush. The tire wall has a different color in the rim region. A pre-colored rubber mixture is used to form the tire wall, especially where the rim width is apparently increased. The widened zone is separated from the remainder of the wall by a circumferential rubbing strip.

### CITATION LIST

### Patent Literature

PTL 1: JP H9-118111 A1
PTL 2: JP 2000-301920 A1

### SUMMARY

### (Technical Problem)

However, as environmental concerns require tires to be more fuel-efficient, thicker sidewalls could increase rolling resistance and reduce fuel efficiency due to increased weight. When the thickness is partially increased by providing a protrusion as in PTLs 1 and 2, the adverse effect on the rolling resistance can be minimized, but the improvement in quietness may not be sufficient. Thus, it has generally been difficult to achieve both improvement in quietness and suppression of increase in rolling resistance.

It is therefore an object of the present invention to provide a pneumatic tire that can improve quietness while suppressing an increase in rolling resistance.

### (Solution to Problem)

According to a first aspect of the invention there is provided a pneumatic tire as specified in claim 1.

As used herein, the "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" above includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the "applicable rim" refers to a rim with a width corresponding to the bead width of the tire. In addition, the "prescribed internal pressure" refers to the air pressure (maximum air pressure) corresponding to the maximum load capacity of a single wheel in the applicable size and ply rating, as described in the aforementioned JATMA, and others. In the case that the size is not listed in the aforementioned industrial standards, the "prescribed internal pressure" refers to the air pressure (maximum air pressure) corresponding to the maximum load capacity specified for each vehicle in which the tire is mounted.

Here, the "thickness of the sidewall portion" means the thickness when measured in the direction perpendicular to the carcass line in the cross section in the tire width direction.

In addition, the thickness of the sidewall portion in the tire radial region is "1.0 to 4 mm thicker than the thickness of the thinnest part of the sidewall portion" means that the average thickness of the sidewall portion in the tire radial region is "1.0 to 4 mm thicker than the thickness of the thinnest part of the sidewall portion". Note, that if a protrusion is formed in the tire radial region, the thickness shall include the height of the protrusion.

### (Advantageous Effect)

According to the present invention, it is possible to provide a pneumatic tire that can improve quietness while suppressing an increase in rolling resistance.

### BRIEF DESCRIPTION OF THE DRAWINGS

In the accompanying drawings:

In the accompanying drawings:
FIG. 1 is a partial cross-sectional view in the tire width direction of a pneumatic tire according to an embodiment of this invention;
FIG. 2 is a partial cross-sectional view in the tire width direction of a pneumatic tire according to an example of the first variant;
FIG. 3 is a partial cross-sectional view in the tire width direction of a pneumatic tire according to an example of the second variant;
FIG. 4 is a diagram providing the evaluation results of EXAMPLE 1;
FIG. 5 is a diagram providing the evaluation results of EXAMPLE 2 (Example 4, and Comparative Examples 2 and 3); and
FIG. 6 is a diagram providing the evaluation results of EXAMPLE 2 (Example 4 and Comparative Example 4).

### DETAILED DESCRIPTION

Hereinafter, embodiments of the present invention will be described in detail with reference to the drawings.

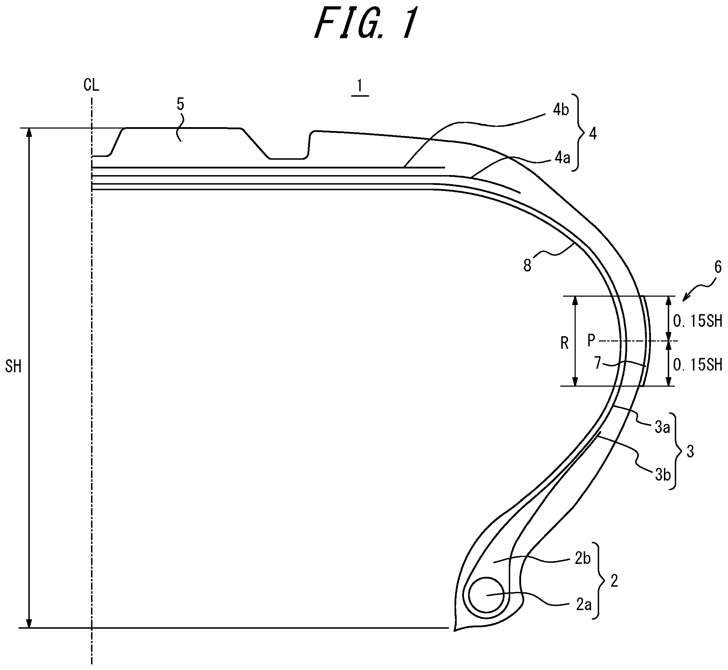

Figure 1 is a partial cross-sectional view in the tire width direction of a pneumatic tire according to an embodiment of this invention. Figure 1 illustrates only one half of the tire in the tire width direction bounded by the tire equatorial plane CL, but the same configuration is used for the other half. Figure 1 is a partial cross-sectional view in the tire width direction in the above-mentioned reference condition.

As illustrated in Figure 1, this pneumatic tire (hereinafter referred to simply as "tire") 1 has a pair of bead portions 2, a pair of sidewall portions 6 connected to the bead portions 2, and a tread portion 5 connected to the sidewall portions 6.

In this example, the bead portion 2 has a bead core 2a and a bead filler 2b. The bead core 2a, in this example, comprises a plurality of bead wires whose surroundings are coated with rubber. The bead wire, in this example, is formed by steel cords. The bead filler 2b is made of rubber or other materials and is located on the outer side of bead core 2a in the tire radial direction. In this example, the bead filler 2b has an abbreviated triangular cross-sectional shape with a decreasing thickness toward the outer side in the tire radial direction. On the other hand, the bead core 2a and the bead filler 2b are not limited to the above examples and can be configured in various ways, and the tire can be configured without the bead core 2a or the bead filler 2b.

As illustrated in Figure 1, the tire 1 has a carcass 3 consisting of one or more carcass plies that straddle the pair of bead portions 2 in a toroidal manner. The carcass 3 has a carcass body portion 3a disposed between the bead cores 2a, and carcass turn-up portions 3b that are folded around the bead core 2a from the inner side to the outer side in the tire width direction. In this example, the end of the carcass turn-up portion 3b is located on the inner side in the tire radial direction from the tire maximum width position, but the extending length of the carcass turn-up portion 3b from the inner side to the outer side in the tire width direction can be set as desired. The carcass 3 can be configured without the carcass turn-up portion 3b, or the carcass turn-up portion 3b can be wrapped around the bead core 2a. The carcass ply can be formed by coating organic fibers with rubber.

On the outer side in the tire radial direction of the crown portion of the carcass 3, a belt 4 and tread rubber that constitute a tread portion 5 are provided. The belt 4, for example, can be constituted by a plurality of belt layers stacked in the tire radial direction. In this example, the belt 4 is an inclined belt, consisting of two belt layers where the belt cords cross each other between the layers. For example, a steel cord can also be used as the belt cords. Note, that the number of belt layers, the inclined angle of belt cords, the width of each belt layer in the tire width direction, etc. are not limited and can be set as needed.

The tire 1 has an inner liner (not illustrated) on the tire inner surface 8.

Here, in the tire of this embodiment, the tire aspect ratio is 10 to 65 (preferably 35 to 55). It is preferable that the tire is configured without side-reinforcing rubber.

In addition, as illustrated in Figure 1, R is the tire radial region between positions each spaced apart, from the tire maximum width position, by 15% of tire cross-sectional height SH to inner side and outer side in the tire radial direction. Here, the thickness of the sidewall portion in the above tire radial region R is 1.0 to 4 mm thicker than the thickness of the thinnest part of the sidewall portion. In this example and according to the invention, a rubber sheet 7 is attached to the surface of the sidewall portion only in the tire radial region R to achieve the above thickness.

The following is a description of the effects of this pneumatic tire.

The inventors studied the phenomenon of noise generation due to tire vibration and found that the tire maximum width position and its vicinity is the main point (the area where the amount of amplitude displacement increases) at 800 Hz to 1000 Hz. Then, the inventors found that by locally increasing the thickness in the tire radial region R between positions each spaced apart, from the tire maximum width position P, by 15% of the tire cross-sectional height SH to inner side and outer side in the tire radial direction (in the figure, 0.15 × SH each upward and downward), the amplitude of 800 Hz to 1000 Hz can be reduced to improve the quietness of the tire, and the increase in thickness can be localized to minimize the increase in tire weight.

If the position where the thickness is increased is outer side or inner side in the tire radial direction than the above tire radial region R, the effect of reducing the amplitude of the vibration mode is not sufficient, and the effect of improving the quietness of the tire cannot be fully obtained.

If the thickness of the sidewall portion in the above tire radial region R is thicker than the thickness of the thinnest part of the sidewall portion by less than 1.0 mm, the effect of suppressing the vibration described above cannot be sufficiently enhanced and the quietness of the tire cannot be improved. On the other hand, if the thickness is larger by more than 4 mm, the thickness near the tire maximum width position P may become locally too large, resulting in a large weight bias, which may cause that part to flow or shift during vulcanization.

In addition, tires with aspect ratios in the above range can have relatively thin sidewall portions, therefore, these tires are particularly suitable for both: reducing rolling resistance by thinning the sidewall portion, and reducing vibration and thus noise due to the local weight increase in the above tire radial region R. In other words, if the aspect ratio of the tire is less than 10, it is difficult to obtain the full effect of the present invention because the tire tends to pick up road vibration, and the sidewall portion, where a locally weighted part can be provided, becomes small. On the other hand, if the aspect ratio of the tire exceeds 65, the weight of the tire itself increases, making it impossible to reduce the rolling resistance.

For the same reasons as above, it is further preferred that the thickness of the sidewall portion in the above tire radial region R be 1.5 to 4 mm thicker than the thickness of the thinnest part of the sidewall portion.

Note, that the tire radial width of the above tire radial region R, where the sidewall portion is 1.0 to 4 mm (preferably 1.5 to 4 mm) thicker than the thickness of the thinnest part of the sidewall portion, is preferably 7% or more of the tire cross-sectional height, and it is more preferably 10% or more. This is because the above effects can be fully obtained.

In the above tire radial region R, it is most preferable to have a weighted part (protrusion) at the maximum width portion of the sidewall portion in a circular pattern, however, it may be discontinued on the circumference, and it is preferable that it is disposed in a total of 50% or more of one circumference.

In addition, it is preferable that the thickness of the sidewall portion at the tire maximum width position is 110% to 200% of the thickness of the thinnest part of the sidewall portion. By setting it to 110% or more, the vibration suppression effect described above can further be enhanced to further improve the quietness of the tire, on the other hand, by setting it 200% or less, it can be prevented that the thickness near the tire maximum width position P become locally too large, resulting in a large weight bias, which may cause that part to flow or shift during vulcanization.

It is preferable that, in the reference condition, the thickness of the sidewall portion in a tire radial region R (10%) between positions each spaced apart, from a tire maximum width position, by 10% of tire cross-sectional height to inner side and outer side in the tire radial direction is 1.0 to 4 mm thicker than the thickness of the thinnest part of the sidewall portion. This is because vibration can be reduced more effectively, further improving the quietness of the tire. For the same reason, it is even more preferable that the thickness of the sidewall portion in the tire radial region R (10%) be 1.0 to 3 mm thicker than the thickness of the thinnest part of the sidewall portion.

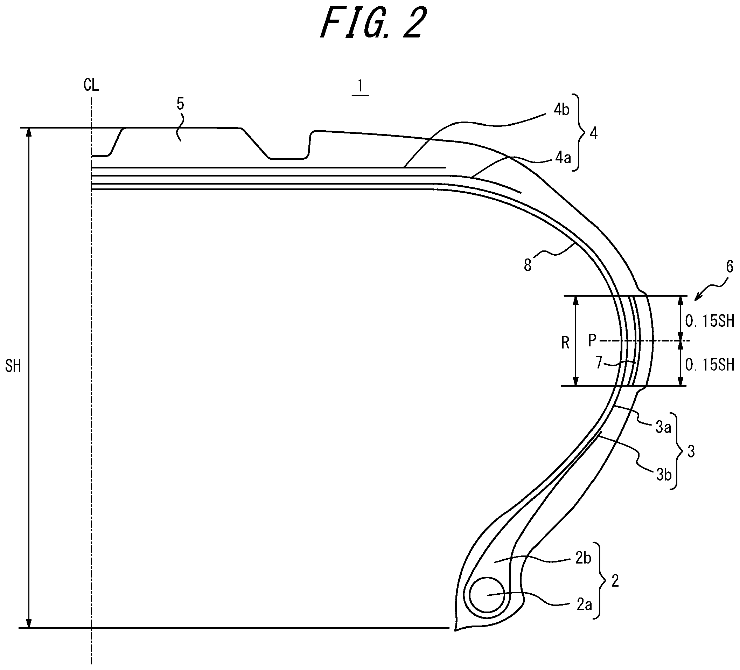

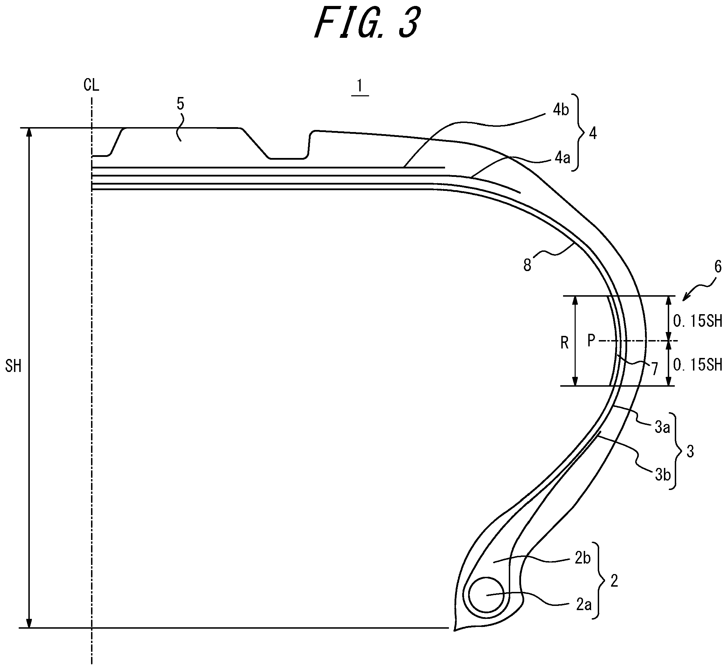

Figure 2 is a partial cross-sectional view in the tire width direction of a pneumatic tire according to an example of the first variant. Figure 3 is a partial cross-sectional view in the tire width direction of a pneumatic tire according to an example of the second variant. In increasing thickness locally in the tire radial region R (or R (10%)), a rubber member (rubber sheet) 7 can be disposed inside the sidewall portion 6, as illustrated in Figure 2, or the rubber member (rubber sheet) 7 can be attached to the tire inner surface 8 (in the case of a tire with an inner liner, it can be attached to the inner side or outer side of the inner liner), as illustrated in Figure 3. However, it is more preferable that the rubber member (rubber sheet) 7 is attached to the outer surface of the tire or disposed inside the sidewall portion (within the sidewall rubber), because attaching the rubber member (rubber sheet) 7 to the inner surface 8 of the tire will increase the energy loss of the inner liner.

In Figures 1 to 3, the rubber member is illustrated as a rubber sheet, but it is not limited to a sheet-shaped rubber member, and can be of various forms, such as a semicircular cross-sectional or rectangular cross-sectional protrusion.

Here, the mass of the sidewall portion in the above tire radial region R (or R (10%)) is preferably 0.5% to 5% of the total mass of the pneumatic tire 1, and 1.5% to 5% is more preferred. By setting it to 0.5% or more, the vibration suppression effect described above can further be enhanced to further improve the quietness of the tire, on the other hand, by setting it to 5% or less, it can be prevented that the weight near the tire maximum width position P become locally too large, resulting in a large weight bias, which may cause that part to flow or shift during vulcanization.

According to the invention, the mass of the sidewall portion in the tire radial region R (10%) is 1.5% to 4.5% of the overall mass of the pneumatic tire, and 1.8% or more is more preferred.

In the above-mentioned tire radial region R (or R (10%)), the thickness of the sidewall portion is preferably 5 mm to 15 mm. By setting it to 5mm or more, the vibration suppression effect can further be enhanced to further improve the quietness of the tire, on the other hand, by setting it to 15mm or less, weight increase can be suppressed as much as possible.

The specific gravity of the rubber member (e.g., rubber sheet) 7 is preferably at least 1.05 times the specific gravity of the sidewall rubber, and more preferably at least 1.1 times the same. This is because it is suitable for locally increasing weight. On the other hand, to prevent the weight bias from becoming too large, the specific gravity of the rubber member (e.g., rubber sheet) 7 is preferably 2 times or less the specific gravity of the sidewall rubber. The specific gravity can be adjusted, for example, by adjusting the amount of filler. The Filler is not limited, but silica, aluminum hydroxide, calcium carbonate, basic magnesium carbonate, clay, diatomaceous earth, recycled and powdered rubber, carbon black, and others can be used.

In the above example, a rubber member was disposed to locally increase the weight of the above radial region R, however, various other methods are also possible. For example, in the above tire radial region R, it is also preferable to have a weighting member made of metal or fiber (metallic or non-metallic fiber). The metal and fiber may consist of steel (a linear metal that is primarily composed of iron (more than 50% by mass of iron to the total mass of the metal filament) or iron alone, or may contain metals other than iron, such as zinc, copper, aluminum, tin, etc. Examples include steel, copper, and alloys containing them. Plating treatment may be applied to strengthen adhesion to rubber.

Note, that according to the above-mentioned embodiment in which the rubber member is disposed in the above tire radial region R, it has the advantage of high durability against repeated deformation.

Here, the gauge of the tread rubber is 2 to 8 mm. By setting it to 2 mm or more, the quietness of can be further improved, while by setting it to 15 mm or less, it is possible to reduce rolling resistance due to weight reduction. In order to achieve both reduced rolling resistance and quietness at an even higher level, it is more desirable that the gauge of the tread rubber be 8 mm or less.

The "tread rubber gauge" is the thickness in the tire radial direction from the tread surface to the outermost reinforcement member in the tire radial direction (e.g., the outermost belt layer in the tire radial direction, and if the belt reinforcement layer is disposed on the outer side in the tire radial direction of the belt, the outermost belt reinforcement layer in the tire radial direction) at the tire equatorial plane, under the reference condition. However, if grooves are disposed on the tire equatorial plane, it shall be assumed that there are no grooves.

Examples of this invention are described below.

### EXAMPLES

### (EXAMPLE 1)

Three prototypes of tires of tire size 205/55R16 with added mass on the surface of the tire maximum width position in the above tire radial region R, as illustrated in Figure 1, were made with different weights (Examples 1 to 3). In addition, a conventional type without adding mass at the maximum width position was also prepared (Comparative Example 1). In Example 1, a mass of 55 g was added, in Example 2, a mass of 105 g was added, and in Example 3, a mass of 165 g was added. As a result, the mass of the sidewall portion in the above tire radial region R in Examples 1, 2, and 3 was 0.5%, 1%, and 2% of the total mass of the pneumatic tire, respectively. In addition, in Examples 1, 2, and 3, the thickness of the sidewall portion in the above tire radial region R was 0.5 mm, 1 mm, and 2 mm thicker than the thickness of the thinnest part of the sidewall portion, respectively.

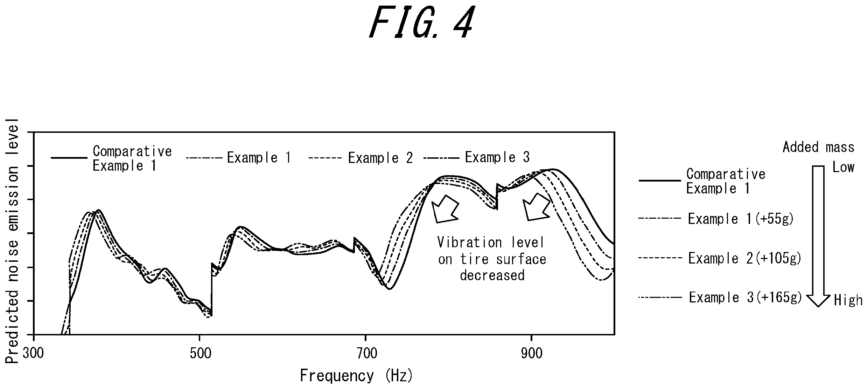

For these tires, the vibration modes in the above tire radial region R were measured by FEM simulation. The measurement results are provided in Figure 4.

As illustrated in Figure 4, the amplitude of 800 Hz to 1000 Hz is reduced in Examples 1 to 3 compared to Comparative Example 1.

### (EXAMPLE 2)

Next, the effect of this invention was verified by varying the position at which the weight was increased. In Example 4, a tire with a mass of 130 g added to the maximum width position was manufactured as a prototype. In Example 4, the mass of the sidewall portion in the above tire radial region R was 1.1% of the total mass of the pneumatic tire. In addition, in Example 4, the thickness of the sidewall portion in the above tire radial region R was 1 mm thicker than the thickness of the thinnest part of the sidewall portion. In Comparative Example 2, a mass of 130 g was added to the surface of the sidewall portion in the region radially outer side than the tire radial region R. In Comparative Example 3, a mass of 130 g was added to the surface of the sidewall portion in the region radially inner side than the tire radial region R. In Comparative Example 4, a mass of 130 g was added across the entire sidewall portion.

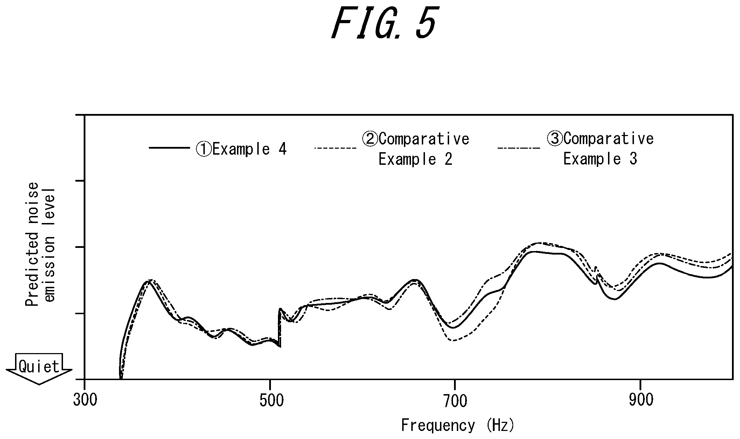

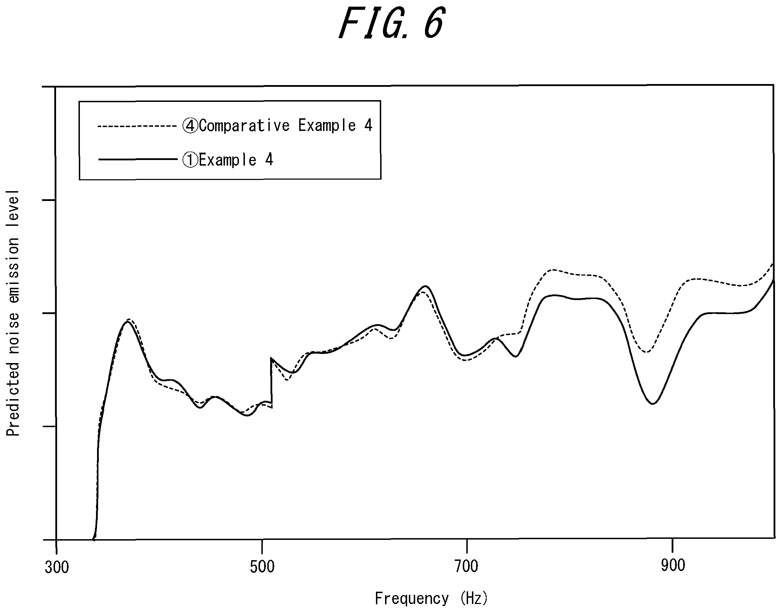

Vibration modes of these tires at the position where the rubber sheet is attached were measured by FEM simulation. The measurement results of Example 4 and Comparative Examples 2 and 3 are provided in Figure 5. The measurement results of Example 4 and Comparative Example 4 are also provided in Figure 6.

Figure 5 indicates that the amplitude of 800 Hz to 1000 Hz is reduced in Example 4 compared to Comparative Examples 2 and 3.

Figure 6 also indicates that the amplitude of 800 Hz to 1000 Hz is reduced in Example 4 compared to Comparative Example 4.

The weight increase in Examples 1 to 3 was 0.5%, 1%, and 2%, respectively, without causing excessive weight increase. Note, that there was no rubber flow or displacement during vulcanization when the rubber sheets corresponding to these masses were attached.

### REFERENCE SIGNS LIST

- 1: Pneumatic tire
- 2: Bead portion
- 3: Carcass
- 4: Belt
- 5: Tread portion
- 6: Sidewall portion
- 7: Rubber member
- 8: Tire inner surface

## Claims

1. A pneumatic tire (1) with a tire aspect ratio of 10 to 65 and a gauge of a tread rubber of 2 to 8 mm, wherein
when a condition in which the pneumatic tire (1) is mounted on an applicable rim, filled to prescribed internal pressure, and unloaded is defined as a reference condition,
in the reference condition, thickness of a sidewall portion (6) in a tire radial region (R) between positions each spaced apart, from a tire maximum width position (P), by 15% of tire cross-sectional height to inner side and outer side in the tire radial direction is 1.0 to 4 mm thicker than thickness of the thinnest part of the sidewall portion (6),
wherein a rubber sheet (7) is provided only in the tire radial region (R), and
the mass of the sidewall portion (6) in the tire radial region (R) is 1.5% to 4.5% of the overall mass of the pneumatic tire (1).

2. The pneumatic tire (1) according to claim 1, wherein thickness of the sidewall portion (6) at the tire maximum width position is 120% to 200% of the thickness of the thinnest part of the sidewall portion (6).

3. The pneumatic tire (1) according to claim 1 or 2, wherein a rubber member (7) is attached to the tire radial region (R).

4. The pneumatic tire (1) according to claim 3, wherein the rubber member (7) is attached to a tire inner surface (8).

5. The pneumatic tire (1) according to claim 3, wherein the rubber member (7) is attached to a tire outer surface.

6. The pneumatic tire (1) according to claim 3, wherein the rubber member (7) is disposed inside the tire (1).

## Patentansprüche

1. Luftreifen (1) mit einem Reifenquerschnittsverhältnis von 10 bis 65 und einer Laufflächenstärke von 2 bis 8 mm, wobei,
wenn ein Zustand, in dem der Luftreifen (1) auf eine anwendbare Felge montiert, auf einen vorgeschriebenen Innendruck gefüllt und nicht belastet ist, als Referenzzustand definiert wird,
im Referenzzustand die Dicke eines Seitenwandabschnitts (6) in einer radialen Reifenregion (R) zwischen Positionen, die jeweils von einer Reifenmaximalbreitenposition (P) um 15 % der Reifenquerschnittshöhe nach innen und nach außen in der radialen Reifenrichtung beabstandet sind, um 1,0 bis 4 mm dicker ist als die Dicke des dünnsten Teils des Seitenwandabschnitts (6),
wobei eine Gummibahn (7) nur in der radialen Reifenregion (R) vorgesehen ist, und
die Masse des Seitenwandabschnitts (6) in der radialen Reifenregion (R) 1,5% bis 4,5% der Gesamtmasse des Luftreifens (1) beträgt.

2. Luftreifen (1) nach Anspruch 1, wobei die Dicke des Seitenwandabschnitts (6) an der Reifenmaximalbreitenposition 120 % bis 200 % der Dicke des dünnsten Teils des Seitenwandabschnitts (6) beträgt.

3. Luftreifen (1) nach Anspruch 1 oder 2, wobei ein Gummielement (7) an der radialen Reifenregion (R) angebracht ist.

4. Luftreifen (1) nach Anspruch 3, wobei das Gummielement (7) an einer Reifeninnenfläche (8) angebracht ist.

5. Luftreifen (1) nach Anspruch 3, wobei das Gummielement (7) an einer Reifenaußenfläche angebracht ist.

6. Luftreifen (1) nach Anspruch 3, wobei das Gummielement (7) im Inneren des Reifens (1) angeordnet ist.

## Revendications

1. Pneu (1) avec un rapport d'aspect de 10 à 65 et une épaisseur de caoutchouc de la bande de roulement de 2 à 8 mm, dans lequel
lorsqu'une condition dans laquelle le pneu (1) est monté sur une jante appropriée, gonflé à la pression interne prescrite et déchargé est définie comme condition de référence,
dans la condition de référence, l'épaisseur d'une partie de paroi latérale (6) dans une région radiale du pneu (R) entre des positions espacées, à partir d'une position de largeur maximale du pneu (P), de 15 % de la hauteur de la section transversale du pneu vers le côté intérieur et le côté extérieur dans la direction radiale du pneu est de 1,0 à 4 mm plus épaisse que l'épaisseur de la partie la plus mince de la partie de paroi latérale (6),
dans lequel une feuille de caoutchouc (7) est prévue uniquement dans la région radiale du pneu (R), et
la masse de la partie de paroi latérale (6) dans la région radiale du pneu (R) est de 1,5 % à 4,5 % de la masse totale de la bande pneumatique (1).

2. Pneu (1) selon la revendication 1, dans lequel l'épaisseur de la partie de paroi latérale (6) à la position de largeur maximale du pneu est de 120 % à 200 % de l'épaisseur de la partie la plus mince de la partie de paroi latérale (6).

3. Pneu (1) selon la revendication 1 ou 2, dans lequel un élément en caoutchouc (7) est fixé à la région radiale du pneu (R).

4. Pneu (1) selon la revendication 3, dans lequel l'élément en caoutchouc (7) est fixé à une surface intérieure du pneu (8).

5. Pneu (1) selon la revendication 3, dans lequel l'élément en caoutchouc (7) est fixé à une surface extérieure du pneu (8).

6. Pneu (1) selon la revendication 3, dans lequel l'élément en caoutchouc (7) est situé à l'intérieur du pneu (1).
